# EUROPÄISCHE PATENTSCHRIFT

(11) **EP 3 252 008 B1**
(45) Veröffentlichungstag und Bekanntmachung des Hinweises auf die Patenterteilung: **25.03.2020**
(21) Anmeldenummer: 17173601.0
(22) Anmeldetag: 31.05.2017
(51) Int. Cl.: C01B 33/18, C09C 1/36, C09C 1/04, C09C 1/24, C09C 1/30

(54) **NANOSTRUKTURIERTE MIKROPARTIKEL AUS SILANISIERTEN PRIMÄRPARTIKELN MIT STEUER-BARER REDISPERGIERBARKEIT UND VERFAHREN ZU DEREN HERSTELLUNG**
NANOSTRUCTURED MICROPARTICLES OF MADE OF SILANIZED PRIMARY PARTICLES WITH CONTROLLABLE REDISPERSION AND METHOD FOR THEIR PREPARATION
MICROPARTICULE NANO-STRUCTURÉE CONSTITUÉE DE PARTICULES PRIMAIRES SILANISÉES PRÉSENTANT UNE REDISPERSION RÉGULABLE ET SON PROCÉDÉ DE FABRICATION

(30) Priorität: 31.05.2016 DE 102016209499
(43) Veröffentlichungstag der Anmeldung: 06.12.2017
(73) Patentinhaber: Fraunhofer-Gesellschaft zur Förderung der angewandten Forschung e.V., 80686 München (DE)
(72) Erfinder: BALLWEG, Thomas, 97892 Kreuzwertheim (DE); MANDEL, Karl, 97074 Würzburg (DE); HANSELMANN, Doris, 97082 Würzburg (DE); HAAS, Karl-Heinz, 97080 Würzburg (DE); STAUCH, Claudia, 97072 Würzburg (DE)
(74) Vertreter: Pfenning, Meinig & Partner mbB

(56) Entgegenhaltungen:
- EP-A1- 1 170 637
- EP-A1- 2 221 349
- EP-A1- 2 495 291
- EP-A2- 2 062 948
- WO-A1-2010/066640
- DE-A1-102007 021 002
- US-A1- 2014 339 480

## Beschreibung

Die vorliegende Erfindung betrifft nanostrukturierte Mikropartikel, die silanisierte Primärpartikel enthalten und deren Redispergierbarkeit gesteuert werden kann. Außerdem bezieht sich die Erfindung auf die Verwendung dieser Mikropartikel und auf ein Verfahren zu deren Herstellung.

Silica-Nanopartikel sind vielseitig einsetzbar und spielen in vielen Bereichen eine große Rolle. Die Bedeutung der Silica-Partikel ist insbesondere in der Kautschukindustrie in den letzten Jahren exponentiell gestiegen, nachdem gezeigt wurde, dass sie sich sehr gut als nanoskalige Füllstoffe für Reifenmaterialien eignen und eine Verbesserung von Rollwiderstand und Nassgriffeigenschaften bewirken. Sie besitzen eine hohe spezifische Oberfläche, die nach BET-Messung in einem Bereich von 120 bis zu 280 m²/g liegt. Die hohe spezifische Oberfläche ist eine Voraussetzung für eine gute Füllstoff-Matrix- sowie Füllstoff-Füllstoff-Wechselwirkung und damit für die Performance der Silica-Kautschuk-Mischung. Zur Erzielung von signifikanten Verstärkungseffekten ist gleichermaßen die Kontrolle der Dispergierung und Verteilung der Partikel in der Matrix entscheidend. Die Ausbildung nanoskaliger Sekundärstrukturen aus oligomeren Untereinheiten ist hierbei besonders vorteilhaft. Der Ansatz, auf die Dispergierung der Silica-Partikel in der Matrix gezielt einzuwirken, besteht in der Silanisierung der Partikeloberfläche.

Eine kontrollierte Dispergierung der Partikel in einer polymeren Matrix oder einem anderen Dispersionsmittel geringer Polarität in der Art, dass sie im Grenzfall sogar vollkommen vereinzelt vorliegen, ist zwar darstellbar, jedoch ist die Herstellung eines solchen Komposits oder einer solchen Dispersion bisher nur mit erheblichem technischen Aufwand in Einzelfällen gezeigt.

Für die Herstellung von silanisierten Partikeln werden bereits seit knapp 50 Jahren die gleichen grundlegenden Verfahrensbedingungen gewählt. Bereits im Jahr 1967 wird in der US 2,801,185 beschrieben, dass es günstig ist, wenn die Silanisierung in wasser- und natriumfreien Medien vorgenommen wird. Weiterhin lehrt diese Patentschrift, dass die Silanisierung nur in saurem Milieu durchgeführt werden sollte.

Auch (mehr als 40 Jahre später) im Jahr 2008 basiert die Herstellung von silansierten Partikeln noch im Wesentlichen auf denselben Verfahrensbedingungen. Eine in diesem Jahr angemeldete EP 2110414 A1 schlägt eine mehrstufige Vorschrift zur Silanisierung anorganischer Partikel (Silica-Sole) vor und zeugt damit zugleich von der ungebrochenen Aktualität des Themas sowie des nach wie vor bestehenden Verbesserungs- und Entwicklungsbedarfs. Zunächst wird dabei ein kolloidales, wässriges Kieselsol vorgelegt, dessen pH-Wert mittels lonentauscher auf einen Wert von 2 bis 5 eingestellt wird. Eine erste Silanisierung erfolgt dann unter Zugabe eines Alkoxysilans. Anschließend wird dem Kieselsol eine 6-fache Menge an Isopropanol zugesetzt und der Wasseranteil des Sols wird mit Hilfe von azeotroper Destillation auf etwa 10 % reduziert. Danach kann eine zweite Silanisierung erfolgen, bevorzugt mit Chlorsilan bei 70 °C. Abschließend wird die Dispersion mit einem alkalischem lonentauscher neutralisiert, filtriert, umdispergiert und getrocknet. Die resultierenden Pulver können mit Toluol oder Isopropanol zu einer Dispersion verarbeitet werden, in der die silanisierten Partikel weitestgehend vereinzelt vorliegen.

Besonders aufwendig ist bei diesem Verfahren aus dem Stand der Technik die azeotrope Destillation, die zur Umdispergierung und Vorbereitung der zweiten Silanisierungsstufe dient. Der Einsatz großer Mengen an Isopropanol und Chlorsilan oder anderen Lösemitteln erfüllt darüber hinaus nicht die Kriterien eines nachhaltigen Produktionsverfahrens. Darüber hinaus ist die Redispergierbarkeit der Produkte in einem polaren Lösungsmittel wie Isopropanol, nicht jedoch in einem unpolaren Lösungsmittel wie Cyclohexan gezeigt.

Für den Transport oder die Lagerung ist es aber vorteilhaft die Silica-Nanopartikel zu trocknen und zu einem Pulver zu verarbeiten und nicht unmittelbar nach ihrer Herstellung in das gewünschte Medium umzudispergieren. Werden die Trocknungsaggregate einem Dispersionsmedium zugesetzt, entstehen oft nur sehr grobe Dispersionen mit überwiegend oligomeren Einheiten, die eine Größe von mehr als 1 µm aufweisen.

Die DE 10 2007 021 002 A1 betrifft pulverförmige Partikel, die an der Oberfläche funktionalisiert sind und daraus hergestellte Dispersion.

Die US 2014/0339480 A1 betrifft mit TiO₂ nanostrukturierte Mikropartikel, die silanisierte Primärpartikel enthalten.

Die Druckschrift EP 2 495 291 A1 betrifft mit ZrO₂ silanisierte Primärpartikel und daraus hergestellte Dispersionen.

Die EP 2 221 349 A1 betrifft mit ZnO silanisierte Primärpartikel sowie daraus hergestellte Dispersionen.

Aufgabe der vorliegenden Erfindung war es deshalb, nanostrukturierte Mikropartikel bereitzustellen, welche die Silica-Nanopartikel enthalten und eine steuerbare Redispergierbarkeit aufweisen. Der Grad der Redispergierbarkeit soll dabei nicht nur in gewissen Grenzen variabel sein. Die Mikropartikel sollen vielmehr so gestaltet sein, dass auch der Grenzfall einer vollkommenen Redispergierung der Mikropartikel, d.h. deren Zerfall in vereinzelt vorliegende Nanopartikel, in einer Vielzahl von Dispersionmitteln möglich ist. Die Dispersionsmittel sollen dabei entweder aus hochmolekularen oder aus niedermolekularen Verbindungen ausgewählt sein und sollen eine beliebige Polarität aufweisen können. Ein weiteres Ziel der Erfindung war es, ein entsprechendes Verfahren zur Herstellung solcher Mikropartikel anzugeben.

Diese Aufgabe wurde durch ein Verfahren mit den Merkmalen des Patentanspruches 1 gelöst.

Vorzugsweise ist das Verfahren zur Herstellung von Mikropartikeln enthaltend silanisierte Primärpartikel durch vier Prozessschritte a) bis d) gekennzeichnet. In Schritt a) wird mindestens eine wässrige Dispersion anorganischer Partikel mit einer Größe von 5 nm bis 10 µm vorgelegt. In Schritt b) wird der pH Wert der Dispersion aus Schritt a) auf einen Wert von 8 bis 11,5 eingestellt. In Schritt c) werden die Partikel in Anwesenheit von Alkaliionen mit einem in einem organischen Lösungsmittel gelösten Silanisierungsreagenz umgesetzt und in Schritt d) wird die mindestens eine Dispersion getrocknet.

Entgegen der Lehrmeinung erfolgt die Silanisierung bei diesem Verfahren in Gegenwart von Alkaliionen. Diese können in der wässrigen Dispersion der anorganischen Partikel aus Schritt a) enthalten sein, da sie stabilisierend wirken. Insbesondere in kommerziellen wässrigen Kieselsolen sind durch den Zusatz von NaOH häufig Natriumionen vorhanden.

Vor der Silanisierung in Schritt c) sind somit insbesondere keine Maßnahmen vorzunehmen, die der Entfernung dieser Ionen dienen. Des Weiteren muss der pH-Wert der Dispersion bei dem erfindungsgemäßen Verfahren im Gegensatz zu Verfahren aus dem Stand der Technik vor der Silanisierung nicht zur Zugabe einer Säure reduziert werden. Dies vereinfacht das Verfahren erheblich, da die Kieselsole "as received" eingesetzt werden können.

Die Gegenwart von Alkaliionen wirkt dabei nicht störend, sondern hat einen positiven Einfluss auf die Silanisierung. Dieser positiver Effekt wurde auch bei den Produkten der Stöber Synthese beobachtet: Während die Produkte der sog. Stöber-Synthese, die im ammoniakalischen ethanolischen System erfolgt, nicht unmittelbar erfolgreich silanisierbar sind, gelingt die Silanisierung der Stöber-Partikel vollständig, wenn die Ammonium-Ionen durch Alkali-Ionen substituiert werden.

Eine Abtrennung der Alkaliionen erfolgt entweder gar nicht oder, sofern diese bei der gewünschten Anwendung der Mikropartikel störend sind, erst nach der Silanisierung. Eine Entfernung der Ionen kann dann beispielsweise durch Filtration, Zentrifugation oder Umdispergierung in unpolare Lösemittel erreicht werden.

Weiterhin ist ein hoher Wassergehalt bei der Silanisierung in Schritt c) des vorliegenden Verfahrens zulässig und nicht störend. Vor der Silanisierung der wässrigen Dispersion aus Schritt a) muss Wasser nicht aufwendig (z.B. durch azeotrope Destillation) entfernt werden. Im Falle der als ethanolische Suspension vorliegenden Stöber-Partikel ist die Zugabe von Wasser sogar vorteilhaft für ein gutes Silanisierungsergebnis.

Es ist aber auch notwendig, dass bei der Silanisierung in Schritt c) ein organisches Lösungsmittel in der überwiegend wässrigen Dispersion vorliegt. Das Silanisierungsreagenz wird dazu gelöst in einem organischen Lösungsmittel bereitgestellt. Da das Silanisierungsreagenz eine schlechte Löslichkeit in Wasser und eine gute Löslichkeit in organischen Lösungsmitteln zeigt, wird durch die Anwesenheit eines organischen Lösungsmittels eine bessere Verteilung des Silans in der Suspension erreicht.

Ein optimales Silanisierungsergebnis, z. B. in Form einer maximalen Hydrophobierung der anorganischen Partikel und einer maximalen Redispergierbarkeit der auf diese Weise modifizierten Partikel in Lösungsmitteln unterschiedlichster Polarität, ist mit dem erfindungsgemäßen Verfahren bereits durch eine einstufige Silanisierung möglich.

In einer Variante des erfindungsgemäßen Verfahrens zur Herstellung der Mikropartikel ist es bevorzugt, dass die Schritte a) bis d) als Eintopf-Reaktion ausgeführt werden.

Dies reduziert den apparativen Aufwand und spart zeitintensive Reinigungsschritte.

Außerdem ist es vorteilhaft, wenn der Anteil der anorganischen Partikel in der Dispersion aus Schritt a) 1 bis 50 Gew.-%, bevorzugt 5 bis 15 Gew.-%, beträgt.

Der Gewichtsanteil bezieht sich dabei auf die Summe der Gewichtsanteile von Dispersionsmittel und Partikeln. Eine Dispersion mit diesem Gewichtsanteil wird bevorzugt durch Verdünnung eines kommerziell erhältlichen, alkalisch stabilisierten Kieselsols mit Wasser erreicht.

In einer Ausführungsform des Verfahrens enthalten oder bestehen die Partikel in Schritt a) aus
- Silica, insbesondere Kieselsolen und über Fällungsreaktionen oder über Sol-Gel-Verfahren hergestellten Silica-Partikeln (auch porös), Schichtsilikaten oder Schichtmineralen,
- Oxiden, insbesondere ausgewählt aus der Gruppe bestehend aus TiO₂, ZnO, Eisenoxid und Zirkonoxid,
- oder Hydroxiden, insbesondere ausgewählt aus der Gruppe bestehend aus Al(OH)₃ und MgAl(OH)ₓ.

Außerdem wird der pH-Wert der Dispersion in Schritt b) des Verfahrens bevorzugt mit einer Base oder einem basischen Lösungsmittel, insbesondere ausgewählt aus der Gruppe bestehend aus KOH, NaOH, Triethylamin und Mischungen hiervon, auf einen Wert im Bereich von 8,5 bis 11,5, besonders bevorzugt von 9,0 bis 10,0, eingestellt.

Das bei dem Verfahren in Schritt c) verwendete Silanisierungsreagenz ist bevorzugt
ein Alkoxysilan,
besonders bevorzugt Methacryloxypropyltrimethoxysilan (MEMO) oder ein Ethoxy-, Methoxy-, Diethoxy-, Dimethoxy-, Triethoxy- oder Trimethoxysilan mit jeweils verzweigten und/oder unverzweigten Alkylresten mit 1 bis 16 Kohlenstoffatomen
ein Vinylsilan, ein Aminosilan, ein Carboxysilan,
ein Schwefelsilan,
besonders bevorzugt ausgewählt aus der Gruppe bestehend aus Mercaptopropyltrimethoxysilan und Bis[3-(Triethoxysilyl)propyl]tetrasulfid (TESPT),
ein Siloxan,
besonders bevorzugt ausgewählt aus der Gruppe bestehend aus Alkoxysiloxanen, Octamethylcyclotetrasiloxan und Hexamethylcyclotrisiloxan,
ein Silazan
oder ein Gemisch von diesen
und liegt besonders bevorzugt als verdünnte Lösung in Ethanol vor.

Die Wahl des Silanisierungsreagenzes ist dabei entscheidend für die spätere Redispergierbarkeit. Das Silanisierungsreagenz bestimmt nach der Umsetzung in Schritt c) die Oberflächeneigenschaften des Partikels. Es kann einerseits einen Einfluss auf die Oberflächenenergie der Nanopartikel ausüben und andererseits funktionelle Gruppen beinhalten, die sich für eine potentielle kovalente Bindung an die Matrix eignen, in der die Partikel dispergiert werden sollen.

Der Einsatz von Mischungen verschiedener Silane ist möglich. Auf den Einsatz von Chlorsilanen kann gänzlich verzichtet werden.

Es werden nur Silanisierungsreagenzien eingesetzt, die weder organische Säurefunktionen noch salzbildende Gruppen enthalten. Durch das Vermeiden dieser Silanisierungsreagenzien ist es möglich die Partikel auch in unpolaren, organischen Lösungsmitteln zu redispergieren.

Bei dem Verfahren zur Herstellung der Mikropartikel werden in Schritt c) bevorzugt 0,5 bis 20, besonders bevorzugt 1 bis 10 Moleküle des Silanisierungsreagenzes pro Quadratnanometer der Oberfläche der Partikel eingesetzt.

Die Menge des eingesetzten Silanisierungsreagenzes ist primär durch die spezifische Oberfläche der Partikel und sekundär durch den gewünschten Hydrophobierungsgrad definiert.

In einer weiteren bevorzugten Ausführungsform des erfindungsgemäßen Verfahrens, sind die Partikel in Schritt a) flach sind oder weisen eine zylindrische oder sphärische Geometrie, bevorzugt eine sphärische Geometrie mit einer Größe von 5 nm bis 10 µm, besonders bevorzugt von 5 nm bis 200 nm, auf.

Im Falle einer flachen Geometrie ist dabei insbesondere an Plättchen aus Magnesiumaluminiumhydroxid zu denken, während eine zylindrische Geometrie auf stäbchenförmige Partikel gerichtet ist.

Die Partikel werden vorteilhafterweise in Schritt c) mit dem Silanisierungsreagenz bei Temperaturen von 20 bis 100°C, bevorzugt von 70 bis 80°C, für 0,5 bis 4 Stunden umgesetzt.

Es ist außerdem bevorzugt, dass die Dispersion in Schritt d) einem Sprühtrocknungsprozess unterzogen wird, besonders bevorzugt einem Sprühtrocknungsprozess mit einer Eingangstemperatur von 120 bis 160 °C, ganz besonders bevorzugt in einem Sprühtrocknungsprozess mit einer Eingangstemperatur von 120 bis 160 °C und einer Auslasstemperatur von 60 bis 80°C, wobei die versprühten silanisierten Primärpartikel für 24 bis 72 Stunden in einem Ofen bei einer Temperatur von maximal 110 °C nachgetrocknet werden.

Auf Grund der Kombination von zwei Trocknungsverfahren weisen die Partikel eine sehr geringe Restfeuchtigkeit auf, so dass von sehr gut getrockneten Proben gesprochen werden kann. Die Restfeuchtigkeit nach dem zweiten Trocknungsschritt im Ofen beträgt weniger als 3 Gew.-%, insbesondere weniger als 1 Gew.-% und ganz besonders weniger als 0,2 Gew.-% jeweils bezogen auf die gesamte Masse des Partikels.

Die Bestimmung der Restfeuchte erfolgt bevorzugt in der Weise, dass eine Probe von typischerweise 20 mg in einem Tiegel von Raumtemperatur bis 250 °C unter Inertgas mit einer Rate von 10 K/min erwärmt wird und der Gewichtsverlust gravimetrisch mit Hilfe eines Netzsch STA 449 erfasst wird. Alternativ hierzu kann auch anhand größerer Proben von typischerweise 5 g die gravimetrische Gewichtsverlustbestimmung nach Trocknung im Ofen bei 220 °C für 30 Minuten erfolgen.

Eine weitere Variante des Verfahrens sieht vor, dass mindestens zwei Dispersionen unterschiedlicher Funktionalisierung hergestellt werden und die mindestens zwei Dispersionen vor dem Trocknen in Schritt d) vermischt werden oder
dass in Schritt a) eine nicht silanisierte Dispersion vorgelegt wird und die Dispersion vor dem Trocknen mit einer Dispersion silanisierter anorganischer Partikel vermischt wird,
wobei die Mischung vor dem Einleiten in den Sprühturm oder nach Einleiten in den Sprühturm aber vor Durchtritt durch die Sprühdüse erzeugt wird.

Bei der Herstellung von zwei Dispersionen in Schritt a) ist bevorzugt, dass sich die Partikel der einen Dispersion von den Partikeln der zweiten Dispersion unterscheiden. Die Partikel der einen Dispersion können dabei beispielsweise einen Silanisierungsgrad aufweisen, der von dem Silanisierungsgrad der Partikel in der zweiten Dispersion abweicht. Durch diese Vorgehensweise kann der Silanisierungsgrad und der Grad der Redispergierbarkeit der getrockneten Mikropartikel in einem weiten Rahmen und kontinuierlich variiert werden.

Der Silanisierungsgrad wird dabei durch die Art und Menge des eingesetzten Silanisierungsmittels bestimmt.

Die Partikel der zwei Dispersionen können sich aber auch bezüglich der Größe der eingesetzten Primärpartikel oder der chemischen Zusammensetzung der Primärpartikel unterscheiden.

Die erfindungsgemäßen nanostrukturierten Mikropartikel enthaltend silanisierte Primärpartikel, sind dadurch gekennzeichnet, dass die Redispergierbarkeit der Mikropartikel durch den Silanisierungsgrad an der Oberfläche der Primärpartikel steuerbar ist.

Mit der Redispergierbarkeit ist hier eine Dispergierbarkeit der Mikropartikel in Flüssigkeiten oder Matrices unterschiedlicher Polarität, insbesondere geringer Polarität, gemeint.

Die nanostrukturierten Mikropartikel zerfallen bei der Redispergierung bevorzugt in Primärpartikel und/oder oligomere Subeinheiten, wobei die oligomeren Subeinheiten besonders bevorzugt aus 2 bis 100.000 Primärpartikeln, ganz besonders bevorzugt aus 2 bis 1000 Primärpartikeln, bestehen und die Primärpartikel besonders bevorzugt eine Größe von 5 nm bis 10 µm, ganz besonders bevorzugt von 5 bis 200 nm, insbesondere von 10 bis 60 nm, aufweisen und von unterschiedlicher chemischer Zusammensetzung sein können.

Neben dem Einsatz von Primärpartikeln mit unterschiedlicher chemischer Zusammensetzung zur Herstellung der nanostrukturierten Mikropartikel ist es auch möglich, Primärpartikel mit unterschiedlicher Größe zu verwenden. Die oligomeren Subeinheiten, in welche die Mikropartikel bei der Redispergierung zerfallen können, können demnach auch aus Primärpartikeln unterschiedlicher Größe bestehen.

Ein besonders bevorzugter Grenzfall bei den erfindungsgemäßen Mikropartikeln ist, dass sie bei der Redispergierung ausschließlich in Primärpartikel zerfallen und keine oligomeren Subeinheiten entstehen.

Die nanostrukturierten Mikropartikel zerfallen in einer bevorzugten Ausführungsform bei der Redispergierung zu mindestens 50 Gew.-%, besonders bevorzugt mindestens 90 Gew.-%, insbesondere 100 Gew.-%, in oligomere Subeinheiten mit einer Größe von maximal 200 nm, wobei sich der prozentuale Anteil auf das Gewicht der oligomeren Subeinheiten und Primärpartikel bezieht.

Es ist außerdem vorteilhaft im Sinne der vorliegenden Erfindung, dass die nanostrukturierten Mikropartikel in Lösungsmitteln oder Matrices unterschiedlicher Polarität redispergierbar sind, bevorzugt in Lösungsmitteln oder Matrices von geringer Polarität, besonders bevorzugt in einer polymeren, insbesondere elastomeren Matrix und einem organischen Lösungsmittel ausgewählt aus der Gruppe bestehend aus Isopropanol, Toluol, Cyclohexan, Hexan und Ethanol, wobei die Redispergierung bevorzugt durch Ultraschallbehandlung, Kneter oder Mischer erfolgt.

Die nanostrukturierten Mikropartikel enthaltend silanisierte Primärpartikel sollen insbesondere durch das oben beschriebene Verfahren hergestellt werden.

Die nanostrukturierten Mikropartikel mit den oben diskutierten Eigenschaften lassen sich vorteilhaft in der Kautschuk- oder Kunststoffindustrie, für Toner oder Kabelisolierungen, als Flammschutzmittel für Kunststoffe, als alleiniger Füllstoff für Reifen oder als Füllstoff für Reifen in Verbindung mit anderen kommerziellen Silica-Produkten, zur Erzeugung anisotroper Materialeigenschaften oder als Varistorelemente in der Hochspannungstechnologie verwenden.

Der Einsatz als Varistorelemente in der Hochspannungstechnologie wird dadurch möglich, dass die elektrischen Eigenschaften (Stromfluss versus angelegter Spannung), insbesondere von oligomeren Sekundärstrukturen aufgebaut aus ZnO Primärpartikeln, gezielt eingestellt werden können.

Die erfindungsgemäßen Mikropartikel eignen sich insbesondere als Füllstoff für Reifenmaterialien. Sie können in einer Kautschukmasse auf Größe der silanisierten Primärpartikel oder nanoskalige Oligomere derselben redispergiert werden, wodurch die Voraussetzungen für einen maximalen Verstärkungseffekt durch Füllstoff-Matrix- sowie Füllstoff-Füllstoff-Wechselwirkung geschaffen werden.

Durch die kontrollierte Oberflächengestaltung und Dispergierung der Partikel wird es möglich, die mechanischen Eigenschaften eines Komposits, z. B. den E-Modul oder auch die Abriebfestigkeit einzustellen, ohne den Füllstoff-Anteil zu verändern. Daraus ergeben sich bisher nicht verfügbare Freiheitsgrade, die für Kautschuk-Komposit-Formulierungen positiv genutzt werden können.

Der Verstärkungseffekt kann optional verbessert werden durch kovalente Anbindung der Partikel an die Matrix mit Hilfe von Schwefelsilanen. Die Partikel können insbesondere auch in Kombination mit den astförmig verzweigten Silica-Varianten (z. B. Ultrasil-Produkte von Evonik) eingesetzt werden.

Anhand der nachfolgenden Figuren soll der erfindungsgemäße Gegenstand näher erläutert werden, ohne diesen auf eine der gezeigten speziellen Ausführungsformen einschränken zu wollen.

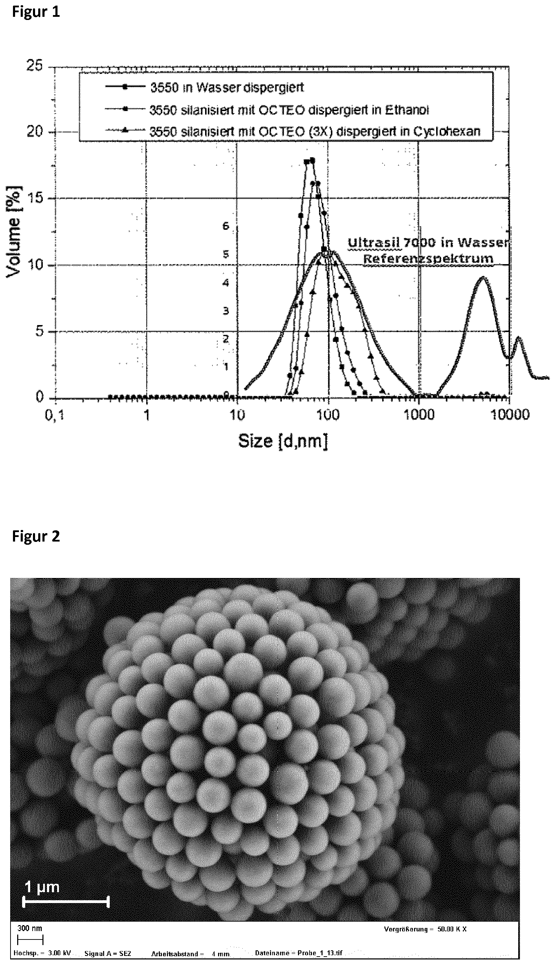

Figur 1 zeigt einen Graph, in dem für vier verschiedene Dispersionen der Volumenanteil der enthaltenen Primärpartikel gegen den Partikeldurchmesser d aufgetragen ist. Die erste Dispersion besteht in einer Dispersion von nicht silanisierten Silica-Partikeln in Wasser (Quadrate). Die zweite Dispersion ist eine Dispersion der gleichen Silica-Partikel mit einer Octyltriethoxysilan (OCTEO) modifizierten Oberfläche in Ethanol. Die dritte Dispersion ist eine Dispersion der mit OCTEO modifizierten Partikel in Cyclohexan (Kreise). Bei den Partikeln der dritten Dispersion wurde drei Mal so viel Silanisierungsreagenz eingesetzt wie bei den Partikeln der zweiten Dispersion. Die verschiedenen Dispersionsmedien wurden verwendet, um die Redispergierbarkeit der Mikropartikel in Lösungsmitteln beliebiger Polarität zu demonstrieren. Die Gegenüberstellung der Partikelgrößenverteilung von Dispersionen mit silanisierten und nicht silanisierten Silica-Partikeln zeigt, dass sich bei der Redispergierung der erfindungsgemäßen Mikropartikel keine Agglomerate bilden.

Zum Vergleich ist auch noch die Partikelgrößenverteilung einer Dispersion aus Ultrasil 7000 in Wasser gezeigt. Diese hat im Sub-Mikrometer-Bereich von 10 bis 1000 nm ebenfalls ein Maximum, weist aber auch einen großen Anteil von Agglomeraten auf, die deutlich größer als 1 µm sind.

Figur 2 zeigt eine elektronenmikroskopische Aufnahme von einem Mikropartikel, der silanisierte Primärpartikel enthält. Die Größe des Mikropartikels beträgt etwa 3 µm, während die silanisierten Primärpartikel einen durchschnittlichen Durchmesser von etwa 250 nm (oberer Bereich des Größenspektrums) aufweisen. Die silanisierten Primärpartikel sind dabei so angeordnet, dass eine himbeerartige Struktur des Mikropartikels resultiert.

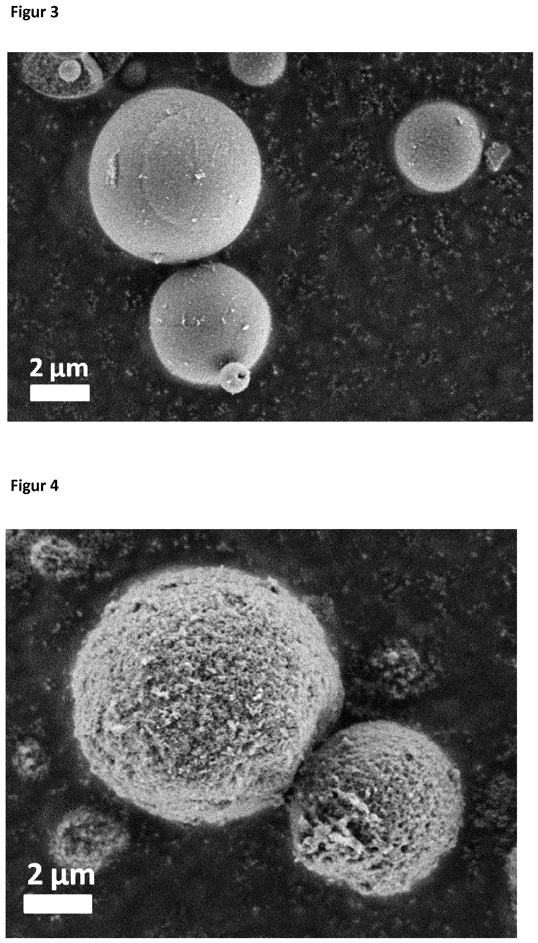

Figur 3 zeigt einen Mikropartikel, der aus unmodifizierten Silicapartikeln aus dem unteren Bereich des Größenspektrums (primär 20 nm) zusammengesetzt ist.

Figur 4 zeigt einen Mikropartikel, der ausschließlich aus silanisierten Primärpartikeln (Silan: OCTEO) zusammengesetzt ist. Im Gegensatz zu Figur 3 kann der visuelle Eindruck der Morphologie als ein "lockerer" Verbund von Primärpartikeln beschrieben werden.

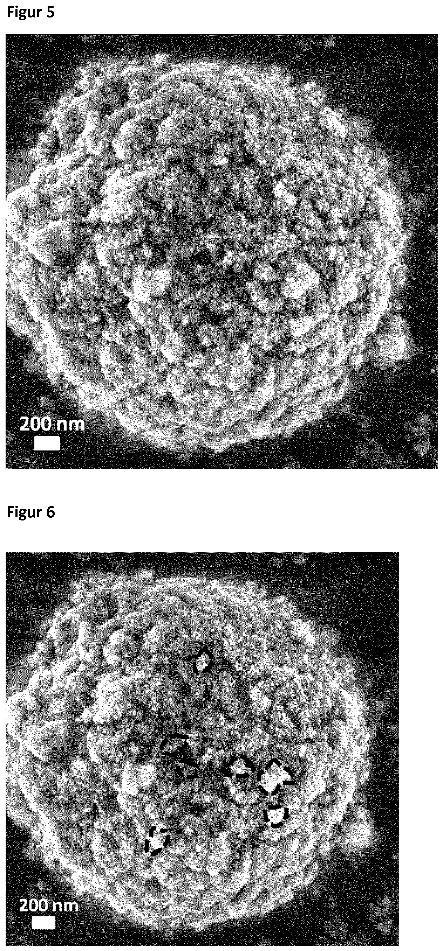

Figur 5 zeigt einen Mikropartikel bestehend aus einer 50 : 50 Mischung aus nicht silanisierten und mit OCTEO silanisierten Silica-Primärpartikeln.

Figur 6 entspricht der Aufnahme aus Figur 5. Graphisch hervorgehoben sind hier die oligomeren Unterstrukturen, welche aus der Mischung der silanisierten und unsilanisierten Partikeldispersionen resultieren und in die das Mikropartikel nach Redispergierung zerfällt.

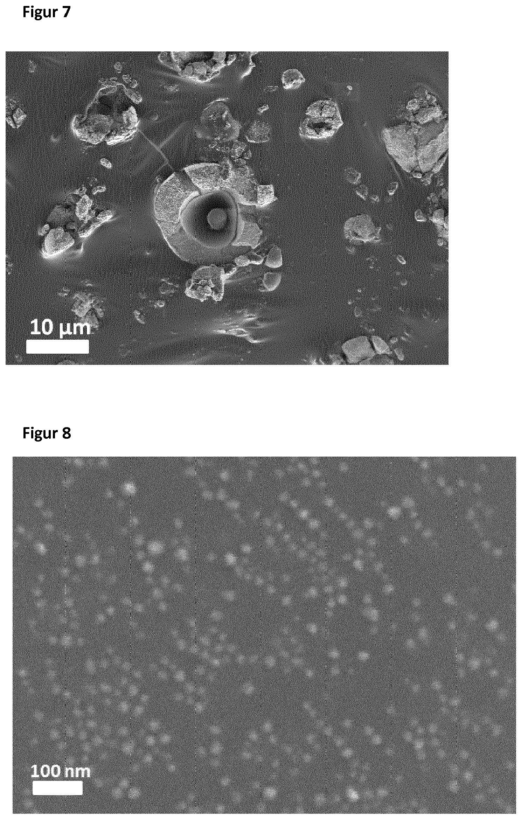

Figur 7 zeigt Mikropartikel erhalten durch Sprühtrocknung von unsilanisierten Primärpartikel nach Einarbeitung in eine Elastomermatrix. Die Mikropartikel sind irreversibel aggregiert und nahezu vollständig erhalten.

Figur 8 zeigt vollständig silanisierte Primärsilicapartikel (OCTEO als Silanisierungsreagenz), die mittels Mixer oder Kneter in eine Matrix eingebracht wurden und dort vollständig dispergiert als Primärpartikel vorliegen.

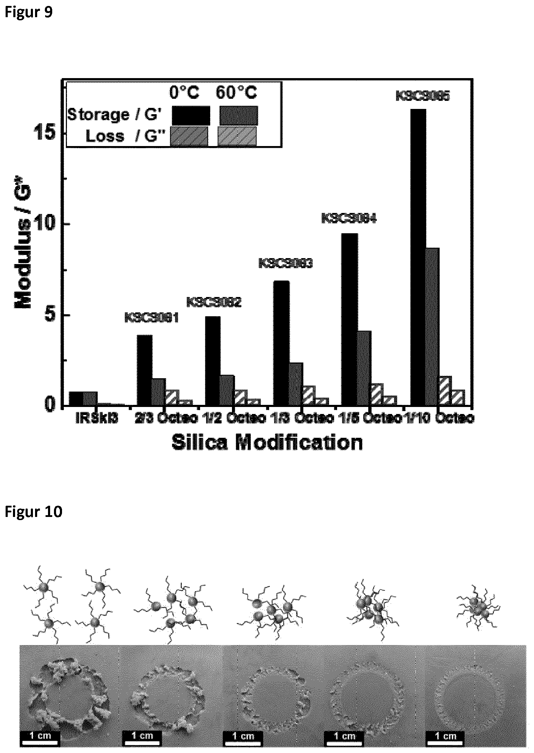

Figur 9 zeigt, dass über die Menge des eingesetzten Silanisierungsreagenzes bei konstantem Füllstoffanteil der komplexen Schubmodul eines Kautschuk-Komposits systematisch verschoben werden kann. Indem nicht über die Menge, sondern über die Dispergierung und Verteilung des Füllstoffs die mechanischen Eigenschaften justiert werden, ergeben sich neue Möglichkeiten der Eigenschaftskombinationen innerhalb eines Kautschuk-Komposits. Zu sehen sind Speicher- und Verlustmodul eines Isopren-Kautschuk-Komposits mit 22 Vol.-% Silica-Anteil in Abhängigkeit von der Menge des eingesetzten Silans (Octeo). Von links nach rechts: reiner Isopren-Kautschuk (IR Ski3) als Füllstofffreie Referenz, in der Folge die Wirkung eines abnehmenden Octeo-Anteils beginnend mit 2/3 und endend mit 1/10 der für eine vollständige Modifizierung notwendigen Menge.

Figur 10 kann das Abrieb-Verhalten eines Isopren-Kautschuk-Komposits bei einem konstanten Silica-Füllstoff-Anteil von 22 Vol.-% in Abhängigkeit vom Grad der Silanisierung (Octeo) entnommen werden. Die Bildfolge zeigt von links nach rechts die Wirkung einer abnehmenden Silan-Menge beginnend von 2/3 und endend mit 1/10 der Menge, die zur vollständigen Oberflächenbelegung als notwendig berechnet wurde.

## Patentansprüche

1. Verfahren zur Herstellung von Mikropartikeln enthaltend silanisierte Primärpartikel, **dadurch gekennzeichnet, dass**
a) mindestens eine wässrige Dispersion anorganischer Partikel mit einer Größe von 5 nm bis 10 µm vorgelegt wird,
b) der pH Wert der Dispersion aus Schritt a) auf einen Wert von 8 bis 11,5 eingestellt wird,
c) die Partikel in Anwesenheit von Alkaliionen mit einem in einem organischen Lösungsmittel gelösten Silanisierungsreagenz, welches weder organische Säurefunktionen noch salzbildende Gruppen enthält, umgesetzt werden und
d) die mindestens eine Dispersion getrocknet wird.

2. Verfahren nach Anspruch 1, **dadurch gekennzeichnet, dass** die Schritte a) bis d) als Eintopf-Reaktion ausgeführt werden.

3. Verfahren nach einem der vorhergehenden Ansprüche, **dadurch gekennzeichnet, dass** der Anteil der Partikel in der Dispersion aus Schritt a) 1 bis 50 Gew.-%, bevorzugt 5 bis 15 Gew.-%, beträgt.

4. Verfahren nach einem der vorhergehenden Ansprüche, **dadurch gekennzeichnet, dass** die Partikel in Schritt a)
- Silica, insbesondere Kieselsole und über Fällungsreaktionen oder über Sol-Gel-Verfahren hergestellte Silica-Partikel, Schichtsilikate oder Schichtminerale,
- Oxide, insbesondere ausgewählt aus der Gruppe bestehend aus TiO₂, ZnO, Eisenoxid und Zirkonoxid,
- oder Hydroxide, insbesondere ausgewählt aus der Gruppe bestehend aus Al(OH)₃ und MgAl(OH)ₓ
enthalten oder daraus bestehen.

5. Verfahren nach einem der vorhergehenden Ansprüche, **dadurch gekennzeichnet, dass** der pH-Wert der Dispersion in Schritt b) mit einer Base oder einem basischen Lösungsmittel, insbesondere ausgewählt aus der Gruppe bestehend aus KOH, NaOH, Triethylamin und Mischungen hiervon, auf einen Wert im Bereich von 8,5 bis 11,5, bevorzugt von 9,0 bis 10,0, eingestellt wird.

6. Verfahren nach einem der vorhergehenden Ansprüche, **dadurch gekennzeichnet, dass** das Silanisierungsreagenz in Schritt c)
ein Alkoxysilan,
bevorzugt Methacryloxypropyltrimethoxysilan (MEMO) oder ein Ethoxy-, Methoxy-, Diethoxy-, Dimethoxy-, Triethoxy- oder Trimethoxysilan mit jeweils verzweigten und/oder unverzweigten Alkylresten mit 1 bis 16 Kohlenstoffatomen
ein Vinylsilan, ein Aminosilan,
ein Schwefelsilan,
bevorzugt ausgewählt aus der Gruppe bestehend aus Mercaptopropyltrimethoxysilan und Bis[3-(Triethoxysilyl)propyl]tetrasulfid (TESPT),
ein Siloxan,
bevorzugt ausgewählt aus der Gruppe bestehend aus Alkoxysiloxanen, Octamethylcyclotetrasiloxan und Hexamethylcyclotrisiloxan,
ein Silazan
oder ein Gemisch von diesen ist
und bevorzugt als verdünnte Lösung in Ethanol vorliegt.

7. Verfahren nach einem der vorhergehenden Ansprüche, **dadurch gekennzeichnet, dass** in Schritt c) 0,5 bis 20, bevorzugt 1 bis 10 Moleküle des Silanisierungsreagenzes pro Quadratnanometer der Oberfläche der Partikel eingesetzt werden.

8. Verfahren nach einem der vorhergehenden Ansprüche, **dadurch gekennzeichnet, dass** die Partikel in Schritt a) flach sind oder eine zylindrische oder sphärische Geometrie, bevorzugt eine sphärische Geometrie mit einer Größe von 5 nm bis 10 µm, besonders bevorzugt von 5 nm bis 200 nm, aufweisen.

9. Verfahren nach einem der vorhergehenden Ansprüche, **dadurch gekennzeichnet, dass** die Partikel mit dem Silanisierungsreagenz in Schritt c) bei Temperaturen von 20 bis 100°C, bevorzugt von 70 bis 80°C, für 0,5 bis 4 Stunden umgesetzt werden.

10. Verfahren nach einem der vorhergehenden Ansprüche, **dadurch gekennzeichnet, dass** die mindestens eine Dispersion in Schritt d) einem Sprühtrocknungsprozess unterzogen wird, bevorzugt einem Sprühtrocknungsprozess mit einer Eingangstemperatur von 120 bis 160 °C, besonders bevorzugt in einem Sprühtrocknungsprozess mit einer Eingangstemperatur von 120 bis 160 °C, einer Auslasstemperatur von 60 bis 80°C und anschließender Nachtrocknung der versprühten Primärpartikel für 24 bis 72 Stunden in einem Ofen bei einer Temperatur von maximal 110 °C.

11. Verfahren nach Anspruch 10, **dadurch gekennzeichnet, dass** die Partikel nach der Nachtrocknung eine Restfeuchtigkeit von kleiner 3 Gew.-%, insbesondere kleiner 1 Gew.-% und besonders bevorzugt kleiner 0,2 Gew.-% aufweisen.

12. Verfahren nach einem der vorhergehenden Ansprüche, **dadurch gekennzeichnet, dass**
mindestens zwei Dispersionen unterschiedlicher Funktionalisierung hergestellt werden und die mindestens zwei Dispersionen vor dem Trocknen in Schritt d) vermischt werden oder
dass in Schritt a) eine nicht silanisierte Dispersion vorgelegt wird und die Dispersion vor dem Trocknen mit einer Dispersion silanisierter anorganischer Partikel vermischt wird,
wobei die Mischung vor dem Einleiten in den Sprühturm oder nach Einleiten in den Sprühturm aber vor Durchtritt durch die Sprühdüse erzeugt wird.

## Claims

1. A method for producing microparticles containing silanised primary particles, **characterised in that**
a) at least one aqueous dispersion of inorganic particles with a size of 5 nm to 10 µm is initially introduced,
b) the pH value of the dispersion from step a) is set to a value of 8 to 11.5,
c) the particles are reacted in the presence of alkali ions with a silanisation reagent dissolved in an organic solvent, which reagent comprises neither organic acid functions nor salt-forming groups, and
d) the at least one dispersion is dried.

2. A method according to Claim 1, **characterised in that** steps a) to d) are carried out as a one-pot reaction.

3. A method according to one of the preceding claims, **characterised in that** the proportion of the particles in the dispersion from step a) is 1 to 50% by weight, preferably 5 to 15% by weight.

4. A method according to one of the preceding claims, **characterised in that** the particles in step a)
- contain or consists of silica, in particular silica sols and silica particles, sheet silicates or sheet minerals produced by way of precipitation reactions or by way of sol/gel methods,
- oxides, in particular selected from the group consisting of TiO₂, ZnO, iron oxide and zirconium oxide,
- or hydroxides, in particular selected from the group consisting of Al(OH)₃ and MgAl(OH)ₓ.

5. A method according to one of the preceding claims, **characterised in that** the pH value of the dispersion in step b) is set to a value in the range from 8.5 to 11.5, preferably from 9.0 to 10.0, with a base or a basic solvent, in particular selected from the group consisting of KOH, NaOH, triethylamine and mixtures thereof.

6. A method according to one of the preceding claims, **characterised in that** the silanisation reagent in step c) is
an alkoxysilane,
preferably methacryloxypropyltrimethoxysilane (MEMO) or an ethoxy-, methoxy-, diethoxy-, dimethoxy-, triethoxy- or trimethoxysilane with in each case branched and/or unbranched alkyl radicals with 1 to 16 carbon atoms,
a vinylsilane, an aminosilane,
a sulphur silane,
preferably selected from the group consisting of mercaptopropyltrimethoxysilane and bis[3-(triethoxysilyl)propyl]tetrasulphide (TESPT),
a siloxane,
preferably selected from the group consisting of alkoxysiloxanes, octamethylcyclotetrasiloxane and hexamethylcyclotrisiloxane,
a silazane
or a mixture thereof
and preferably is present as a dilute solution in ethanol.

7. A method according to one of the preceding claims, **characterised in that** in step c) 0.5 to 20, preferably 1 to 10, molecules of the silanisation reagent per square nanometre of the surface of the particles are used.

8. A method according to one of the preceding claims, **characterised in that** the particles in step a) are flat or have a cylindrical or spherical geometry, preferably a spherical geometry with a size of 5 nm to 10 µm, particularly preferably of 5 nm to 200 nm.

9. A method according to one of the preceding claims, **characterised in that** the particles are reacted with the silanisation reagent in step c) at temperatures of 20 to 100°C, preferably of 70 to 80°C, for 0.5 to 4 hours.

10. A method according to one of the preceding claims, **characterised in that** the at least one dispersion in step d) is subjected to a spray-drying process, preferably a spray-drying process with an inlet temperature of 120 to 160°C, particularly preferably in a spray-drying process with an inlet temperature of 120 to 160°C, an outlet temperature of 60 to 80°C and subsequent after-drying of the sprayed primary particles for 24 to 72 hours in an oven at a temperature of at most 110°C.

11. A method according to Claim 10, **characterised in that** the particles after the after-drying have a residual moisture of less than 3% by weight, in particular less than 1% by weight, and particularly preferably less than 0.2% by weight.

12. A method according to one of the preceding claims, **characterised in that**
at least two dispersions of different functionalisation are prepared and the at least two dispersions are mixed prior to the drying in step d), or
**in that** in step a) a non-silanised dispersion is initially introduced and the dispersion prior to the drying is mixed with a dispersion of silanised inorganic particles,
wherein the mixture is prepared prior to the introduction into the spray tower or after introduction into the spray tower but prior to passing through the spray nozzle.

## Revendications

1. Procédé de fabrication de microparticules contenant des particules primaires silanisées, **caractérisé en ce que**
a) on met en place au moins une dispersion aqueuse de particules inorganiques ayant une grosseur de 5 nm à 10 µm,
b) on ajuste le pH de la dispersion de l'étape a) à une valeur de 8 à 11,5,
c) on fait réagir les particules en présence d'ions de métaux alcalins avec un réactif de silanisation dissous dans un solvant organique, qui ne contient ni fonctions acide organique, ni groupes salifiables, et
d) on sèche l'au moins une dispersion.

2. Procédé selon la revendication 1, **caractérisé en ce que** les étapes a) à d) sont mises en œuvre sous forme d'une réaction monotope.

3. Procédé selon l'une des revendications précédentes, **caractérisé en ce que** la proportion des particules dans la dispersion de l'étape a) est de 1 à 50 % en poids, de préférence de 5 à 15 % en poids.

4. Procédé selon l'une des revendications précédentes, **caractérisé en ce que** les particules, dans l'étape a), contiennent
- de la silice, en particulier des sols de silice et des particules de silice fabriquées par des réactions de précipitation ou par des procédés sol-gel, des phyllosilicates ou des minéraux lamellaires,
- des oxydes, choisis en particulier dans le groupe consistant en le TiO₂, le ZnO, l'oxyde de fer et l'oxyde de zirconium,
- ou des hydroxydes, choisis en particulier dans le groupe consistant en Al(OH)₃ et MgAl(OH)ₓ,
ou en sont constituées.

5. Procédé selon l'une des revendications précédentes, **caractérisé en ce que** le pH de la dispersion est, dans l'étape b), ajusté avec une base ou un solvant basique, choisi en particulier dans le groupe consistant en le KOH, le NaOH, la triéthylamine et les mélanges de ceux-ci, à une valeur comprise dans la plage de 8,5 à 11,5, en particulier de 9,0 à 10,0.

6. Procédé selon l'une des revendications précédentes, **caractérisé en ce que** le réactif de silanisation, dans l'étape c), est
un alcoxysilane, de préférence le méthacryloxypropyltriméthoxysilane (MEMO) ou un éthoxy-, un méthoxy-, un diéthoxy-, un diméthoxy-, un triéthoxy- ou un triméthoxysilane, chacun comportant des radicaux alkyle ramifiés et/ou non ramifiés ayant 1 à 16 atomes de carbone,
un vinylsilane, un aminosilane,
un sulfosilane, choisi de préférence dans le groupe consistant en le mercaptopropyltriméthoxysilane et le tétrasulfure de bis[3-(triéthoxysilyl)propyle] (TESPT),
un siloxane, choisi de préférence dans le groupe consistant en les alcoxysiloxanes, l'octaméthylcyclotétrasiloxane et l'hexaméthylcyclotrisiloxane,
un silazane,
ou un mélange de ceux-ci,
et de préférence se présente sous forme d'une solution diluée dans l'éthanol.

7. Procédé selon l'une des revendications précédentes, **caractérisé en ce qu'**on utilise dans l'étape c) 0,5 à 20, de préférence 1 à 10 molécules du réactif de silanisation par nanomètre carré d'aire des particules.

8. Procédé selon l'une des revendications précédentes, **caractérisé en ce que** les particules de l'étape a) sont planes ou présentent une géométrie cylindrique ou sphérique, de préférence une géométrie sphérique ayant une grosseur de 5 nm à 10 µm, d'une manière particulièrement préférée de 5 nm à 200 nm.

9. Procédé selon l'une des revendications précédentes, **caractérisé en ce que** les particules sont mises à réagir avec le réactif de silanisation de l'étape c) à des températures de 20 à 100 °C, de préférence de 70 à 80 °C, pendant 0,5 à 4 heures.

10. Procédé selon l'une des revendications précédentes, **caractérisé en ce que** l'au moins une dispersion de l'étape d) est soumise à une opération de séchage par atomisation, de préférence à une opération de séchage par atomisation présentant une température d'entrée de 120 à 160 °C, d'une manière particulièrement préférée à une opération de séchage par atomisation présentant une température d'entrée de 120 à 160 °C, une température de sortie de 60 à 80 °C, suivie d'un post-séchage des particules primaires atomisées pendant 24 à 72 heures dans un four à une température au maximum de 110 °C.

11. Procédé selon la revendication 10, **caractérisé en ce que** les particules présentent après le post-séchage une humidité résiduelle inférieure à 3 % en poids, en particulier inférieure à 1 % en poids et d'une manière particulièrement préférée inférieure à 0,2 % en poids.

12. Procédé selon l'une des revendications précédentes, **caractérisé en ce que**
on fabrique au moins deux dispersions présentant des fonctionnalisations différentes, et on mélange les au moins deux dispersions avant le séchage de l'étape d), ou
dans l'étape a), on met en place une dispersion non silanisée, et on mélange la dispersion, avant le séchage, à une dispersion de particules inorganiques silanisées,
le mélange étant produit avant introduction dans la tour d'atomisation ou après introduction dans la tour d'atomisation, mais avant passage par la buse d'atomisation.
